# EUROPEAN PATENT APPLICATION

(11) **EP 3 451 325 A1**
(43) Date of publication of application: **06.03.2019**
(21) Application number: 17806752.6
(22) Date of filing: 31.05.2017
(51) Int. Cl.: G10G 1/00, G06F 3/0483

(54) **ELECTRONIC MUSICAL SCORE DEVICE**

(30) Priority: 31.05.2016 JP 2016109256
(71) Applicant: GVIDO MUSIC CO., LTD., Shinagawa-ku, Tokyo 1400002 (JP)
(72) Inventor: NOGUCHI, Fujio, Tokyo 140-0002 (JP)
(74) Representative: Intellectual Property Services GmbH
(86) International application number: PCT/JP2017/020327
(87) International publication number: WO 2017/209201

(57) **Abstract**

Provided is a novel electronic musical score device that is highly operable without hindering the operations of a user. The electronic musical score device has a configuration wherein: for each display, at least one page turning operation part for page turning is provided to a frame surrounding the display region of the display; a page turning direction is set for each page turning operation part; and the page-turning direction of each page turning operation part is displayed on the frame surface corresponding to the page turning operation part so that it is possible for the user to visually identify the page turning operation part, thus guiding the user to the page turning operation part corresponding to the page turning direction when performing a page turning operation.

## Description

### TECHNICAL FIELD

The present invention relates to an electronic musical score device including at least two displays.

### BACKGROUND ART

Producing a musical piece or creating a musical score (hereinafter also referred to as a score) by using a DAW (digital audio workstation) for producing a musical piece or a PC (personal computer) having an application for the DAW is widely performed.

In addition to use of input means such as a mouse and a keyboard, a touch panel display where handwriting input can be performed is also used so that an input operation can be performed from a display of the PC.

Further, an electronic musical score device having two displays is known. For example, Patent Literature 1 (JP-A-2003-107986) discloses an information processing device which includes two display screens featuring a music stand and on which writing can be freely performed on a display image such as an electronic musical score.

In the information processing device, operation button groups 30 and 40 are provided in the displays. The operation button group 30 is software buttons for instructing musical score operations such as operational page forward feed, page backward feed, return to beginning of page, storing musical score, and displaying another musical score, and processing such as deleting or storing handwritten image and performing various settings. The operation button group 40 is software buttons for instructing switching of operation mode.

The information processing device disclosed in JP-A-2003-107986 has a hinge 30 that openably and closably connects the two display screens at the center thereof.

Patent Literature 2 (U.S. Patent Application Publication No. 2005/0204889) discloses a two-screen touch sensitive display 18.

When the size of the display screen is increased, the weight of the entire device increases and the price rises. Further, it causes various problems related to easiness of manual handling, conveyance, a size for being placed on a music stand when being used as a music score, and strength. Therefore, the size is limited. Thus, it is required to efficiently use an area that can be used as a display for a musical score on the limited display screen.

Patent Literature 3 (JP-A-2013-97023) discloses a display device including a first display portion 110 and a second display portion 120, which are two display devices, and an input means 200 where a rewriting operation of a display of an image, specifically, for example, an instruction of page turning, can be inputted.

However, the operation button group 30 and the operation button group 40 disclosed by Patent Literature 1 occupy a large portion of an area where a musical score can be displayed. Furthermore, it is not possible to instantly determine which button of the operation button group 30 is used for a page turning operation, so that it is not possible to catch up with an operation of a player whose performance progresses quickly. When the sizes of the operation button groups are reduced to increase the area where a musical score can be displayed, it is more difficult for the player to handle the buttons.

Further, a conventional hinge mechanism S, which enables the displays to be opened and closed to the right and left, protrudes form a display screen, so that the device thickness when the displays are closed increases, it is troublesome to place the device on a music stand whose width is limited, and handling of the device is inconvenient. Further, the hinge mechanism S occupies a large area in the central portion of the device, so that it damages appearance of the device and the convenience of the central portion is hindered.

In Patent Literature 2, as it is obvious from FIG. 2, the two-screen touch sensitive display 18 has no opening/closing mechanism, so that it is required to perform handling such as conveyance in an opened state. Therefore, the handling is troublesome. In the same manner as Patent Literature 1, Patent Literature 2 enables page turning by providing page turning touch screen sensors 48 and 49 in the two-screen touch sensitive display 18. Therefore, a display area of a musical score is occupied, and the size of the musical score is reduced, so this is not preferable.

In Patent Literature 3, page turning can be performed by integrally configuring a foot operated type input device and a display device. However, the entire structure becomes large. Although the display portion 110 includes two display screens consisting of a left screen 110 and a right screen 120, the two display screens are not openable/closable in the same manner as in Patent Literature 2, so that it is inconvenient to handle the display device such as to convey the display device.

Therefore, a new electronic musical score device where the convenience of the player is improved is desired. The present invention is made in view of the problems described above.

### CITATION LIST

### PATENT LITERATURE

PATENT LITERATURE 1: JP-A-2003-107986
PATENT LITERATURE 2: U.S. Patent Application Publication No. 2005/0204889
PATENT LITERATURE 3: JP-A-2013-97023

### SUMMARY OF INVENTION

### TECHNICAL PROBLEM

The present invention provides a highly operable new electronic musical score device where a user, for example, a player, can quickly perform page turning and performance is not hindered.

Further, an object of the present invention is to provide an electronic musical score device that can provide various using methods of the electronic musical score device to the user.

Further, the present invention provides a new electronic musical score device that can appropriately write an instruction of a conductor, a teacher, and the like into a musical score and can transmit and display the instruction to a player, a student, and the like as information unique to the player, the student, and the like.

### SOLUTION TO PROBLEM

To achieve the above object, in the electronic musical score device according to the present invention, at least one page turning operation portion for performing page turning on a frame portion surrounding a display area of a display is provided on a frame of each display, and a page turning direction is set for each of the page turning operation portions and the page turning direction of the page turning operation portion is shown on a frame surface corresponding to the page turning operation portion so that a user can visually recognize the page turning operation portion, and thereby when the user performs page turning, the user is guided to a page turning operation portion corresponding to the page turning direction.

The page turning operation portion is comprised of a mechanical or electrical switch such as an electrostatic capacity type switch and a mechanical electric contact type switch.

Among the page turning operation portions, a page turning operation portion for turning the page forward is provided on a frame of a right display panel and a page turning operation portion for turning the page backward is provided on a frame of a left display panel.

In addition, among the page turning operation portions, a page turning operation portion for turning the page forward is provided on a right side frame of a frame of a right display panel, which is far from an opening and closing axis, and a page turning operation portion for turning the page backward is provided on at least any one of a left side frame of the frame of the right display panel, which is close to the opening and closing axis of the displays, a right side frame of a frame of a left display panel, which is close to the opening and closing axis of the displays, and a left side frame of the frame of the left display panel, which is far from the opening and closing axis of the displays.

In addition, among the page turning operation portions, a page turning operation portion for turning the page forward is provided on a left side frame of a frame of a right display panel, which is close to an opening and closing axis of the displays.

In addition, among the page turning operation portions, a page turning operation portion for turning the page backward is also provided on a right side frame of a frame of a right display panel, which is far from an opening and closing axis of the displays.

On a home screen, a selection screen for receiving different categories or parts for left and right display panels is provided and musical scores of different categories or parts are displayed at the same time on the left and right display panels.

On the home screen, a menu for selecting a categorized musical score or scores such as a score for various musical instruments, a composer score, and an orchestra score are displayed. Here, the musical score (score) may include a tablature score for a guitar or a bass.

A menu for selecting a category or a part of musical score is displayed on each display panel when a selection screen for receiving different categories or part types for left and right display panels is selected.

When a musical score is displayed, a musical score display button for accepting enlargement of the musical score is displayed on a part of a margin of the musical score of the left and right displays.

When the musical score display button is touched, an enlarged musical score is displayed.

Further, when a musical score is displayed, an operation button that enables a further operation to be performed on the displayed musical score is displayed on a part of a margin of the musical score of the left and right displays.

When the operation button is touched, a selection menu is displayed where at least one of the following operations can be selected: performing bookmark of a displayed page, displaying a bookmark list that has already been registered, displaying a musical instrument list, and selecting another function.

When the operation button is touched, a menu for selecting the size of a pen point for writing and an eraser button for erasing written information is displayed.

Further, an audio data reproduction menu related to a displayed musical score is provided.

While audio data is being reproduced, a musical score including a part that is currently being reproduced is displayed.

To prevent a musical score of a part that is currently being reproduced from being hidden by a menu indicating that audio data is being reproduced, the menu is moved from the part of the musical score that is currently being reproduced to another position, or the part of the musical score that is currently being reproduced is moved to an area that is not hidden by the menu indicating that audio data is being reproduced.

A playing indication that indicates a paragraph that is currently being played is shown on the display for a musical score that can be reproduced.

Further, the electronic musical score device according to the present invention is configured so that a plurality of electronic musical score devices are configured to be able to communicate with each other, the electronic musical score devices are grouped into one or a plurality of groups, and hand-written input information is shared among the electronic musical score devices for each group.

### BRIEF DESCRIPTION OF DRAWINGS

FIG. 1A is a front of an electronic musical score device 1 of the present invention, whose two display units are opened by about 180 degrees in angle.
FIG. 1B is a front view of the electronic musical score device 1 whose two display units are closed.
FIG. 1C is a bottom view of the electronic musical score device 1 in a state of FIG. 1B.
FIG. 2 shows an example of a home screen of the electronic musical score device 1.
FIG. 3 shows an example of a display list when selecting a piano score from among types of scores on the home screen of FIG. 2 of the electronic musical score device 1.
FIG. 4 shows an example of a score selection display screen when selecting a selection screen of two types of scores (Dual View) on the home screen in FIG. 2 of the electronic musical score device 1.
FIG. 5 shows a display example of a score when selecting Notturno III from the display list in FIG. 3.
FIG. 6 shows a display example where the display of the score of the Notturno III in FIG. 5 is enlarged.
FIG. 7 is a display example when selecting a different part (or different kind of musical instrument) in the same musical piece in the selection screen of two types of scores in FIG. 4.
FIG. 8 is a display example of the score of the same musical piece when unchecking the selection screen of two types of scores in FIG. 4 for comparison with FIG. 7.
FIG. 9 shows an example of prompt when pressing an operation button A in the display of FIG. 5.
FIG. 10 shows a display example when selecting "display bookmark list" from the prompt in FIG. 9.
FIG. 11 shows a display example when pressing an operation button B in the display of FIG. 5.
FIG. 12 shows a first display example when pressing "reproduce music" in the display example in FIG. 11.
FIG. 13 shows a second display example when pressing "reproduce music" in the display example in FIG. 11.
FIG. 14 shows an example when performing handwriting input.
FIG. 15 is a functional block diagram of the electronic musical score device 1.
FIG. 16 is a diagram showing an internal structure of the electronic musical score device including a new hinge disclosed in the present application.
FIG. 17 is a perspective view where a portion of the hinge in FIG. 16 is enlarged.
FIG. 18 is a diagram where parts are developed in a vertical direction in cross-section A-A in FIG. 17.
FIG. 19 is a diagram of the hinge seen from a vertical direction with respect to A-A cross-section in FIG. 17.
FIG. 20 is a diagram showing the hinge when the electronic musical score device is closed in FIG. 19.
FIG. 21 is a perspective view where a portion of the hinge is enlarged.
FIG. 22 is a diagram showing cross-section B-B in FIG. 21.
FIG. 23 is a diagram showing cross-section C-C in FIG. 21 for a hinge according to a first embodiment.
FIG. 24 is a diagram showing an example of an arrangement of first to third sections of a hinge according to a second embodiment.
FIG. 25A is a diagram showing cross-section D-D in FIG. 24 for the hinge according to the second embodiment.
FIG. 25B is a diagram showing cross-section E-E in FIG. 24 for the hinge according to the second embodiment.
FIG. 26A is a diagram showing a modified example of FIG. 25A for a hinge portion according to the second embodiment.
FIG. 26B is a diagram showing a modified example of FIG. 25B for a hinge portion according to the second embodiment.

### DESCRIPTION OF EMBODIMENTS

Hereinafter, embodiments of the present invention will be described with reference to the drawings.

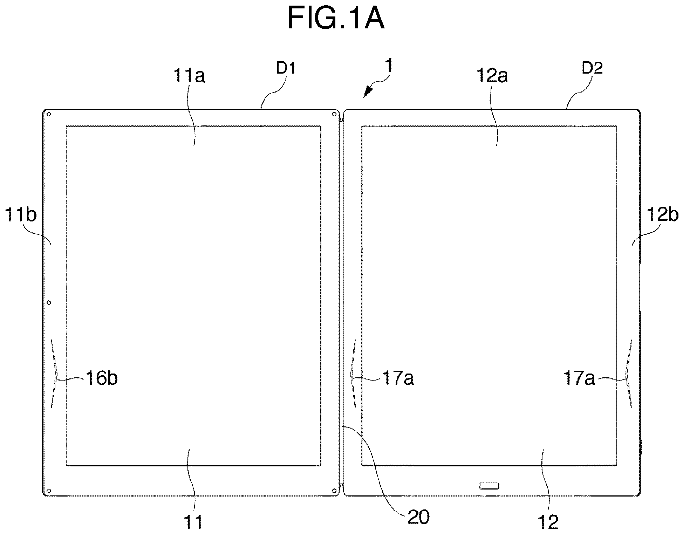

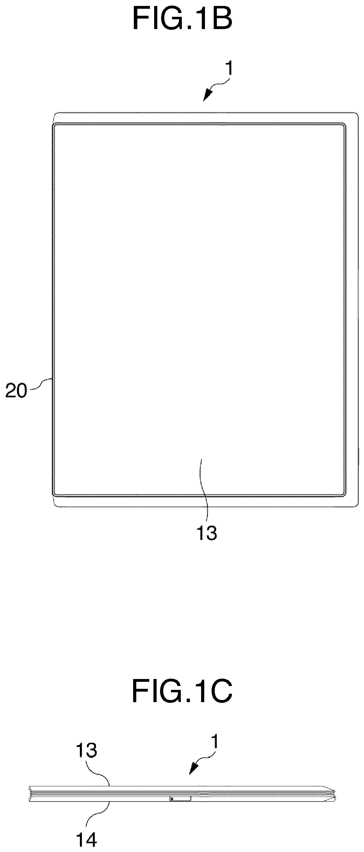

FIGS. 1A to 1C show an external view of an electronic musical score device 1 according to an embodiment of the present invention. More specifically, FIG. 1A is a front view in a state where a first display unit D1 and a second display unit D2 of the electronic musical score device 1 are opened by about 180 degrees in angle, FIG. 1B is a front view in a state where both display units D1 and D2 are closed, and FIG. 1C is a bottom view in a state where both display units D1 and D2 are closed.

The first display unit D1 has a first display portion 11 and a first housing portion 13 provided on a back surface of the first display portion 11. The second display unit D2 has a second display portion 12 and a second housing portion 14 provided on a back surface of the second display portion 12. In a state where the electronic musical score device 1 is closed, a display screen 11a of the first display portion 11 and a display screen 12a of the second display portion 12 in FIG. 1A face each other.

The first display portion 11 and the second display portion 12 are juxtaposed in a longitudinal direction, and a user can see two display screens including the first display portion 11 and the second display portion 12.

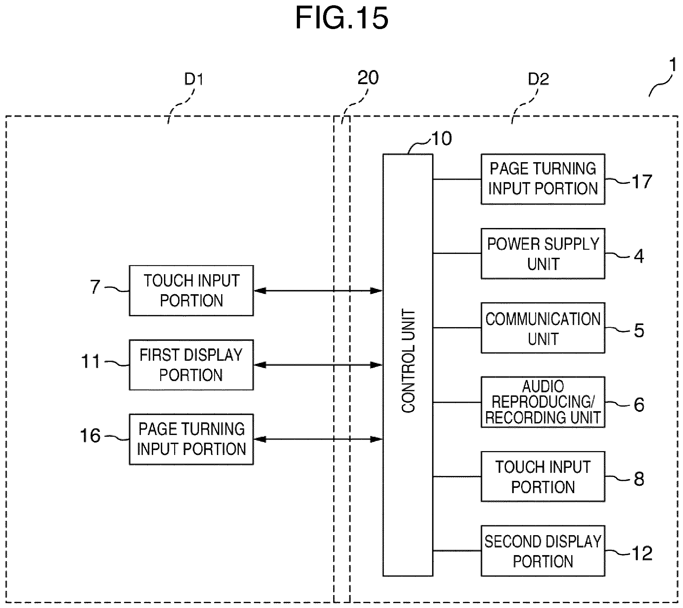

FIG. 15 is a block diagram showing a detailed configuration of the electronic musical score device 1 of the present invention.

The first display unit D1 has a touch input portion 7 that gives a touch panel function to the display screen 11a of the first display portion 11 in addition to the first display portion 11. On the other hand, the second display unit D2 has a control unit 10, a power supply unit 4, a communication unit 5, an audio (voice) reproducing/recording unit 6, and a touch input portion 8 that gives a touch panel function to the second display portion 12 in addition to the second display portion 12.

The first display portion 11 includes a display screen 11a, a frame 11b of the display screen 11a, and a page turning operation portion 16, which is provided in some position in the frame 11b, for turning over a display image displayed on the display screen 11a (symbols a and b are added to the page turning operation portion 16 according to page turning direction, a symbol 16a is used to indicate page feeding in a page forward direction, and a symbol 16b is used to indicate page feeding in a page backward direction). On the other hand, the second display portion 12 includes a display screen 12a, a frame 12b of the display screen 12a, and a page turning operation portion 17, which is provided in a position of the frame 12b, for turning over a display image displayed on the display screen 12a (symbols a and b are added to the page turning operation portion 17 according to page turning direction, a symbol 17a is used to indicate page feeding in a page forward direction, and a symbol 17b is used to indicate page feeding in a page backward direction).

The communication unit 5 is configured to transmit and receive information to and from another electronic musical score device 1 according to the present invention and/or another external device by using at least one of various wired and/or wireless communication methods.

The "external device" may include a mobile terminal such as a smartphone and a tablet PC, a computer server, and the like, besides the electronic musical score device 1.

As a module for the various wired and/or wireless communication methods, it is possible to use a module for performing Internet connection with outside, cellular communication, wireless LAN communication, short-range communication, and the like, and a wired communication module for USB (Universal Serial Bus), HDMI (registered trademark) (High-Definition Multimedia Interface), IEEE (Institute of Electrical and Electronics Engineers) 1394, wired LAN, and the like for communicating with outside through a predetermined connector.

As a module for short-range communication, it is possible to use one of a Bluetooth (registered trademark) module, a Wi-Fi module, an infrared communication module, and the like.

It is preferable that the electronic musical score device 1 can communicate with two or more electronic musical score devices 1. In the Bluetooth, it is possible to configure so that the electronic musical score device 1 can communicate with a plurality of electronic musical score devices 1 through a plurality of channels.

The control unit 10 includes a CPU (Central Processing Unit), non-volatile and/or volatile memories, a GPU (Graphics Processing Unit) for controlling screen displays of the first display portion 11 and the second display portion 12, and performs data communication with and control of units such as the communication unit 5, the audio (voice) reproducing/recording unit 6, the first and the second display portions 11 and 12, the touch input portions 7 and 8, and the page turning operation portions 16 and 17.

Many main electrical units that control the entire electronic musical score device 1 except for control devices for achieving functions of the first display portion 11, the touch input portion 7, and the page turning operation portion 16 are provided in the second display unit, and information inputted from the first and the second display units D1 and D2 and information to be outputted to the first and the second display units D1 and D2 are intensively controlled and processed on the second display unit D2 side.

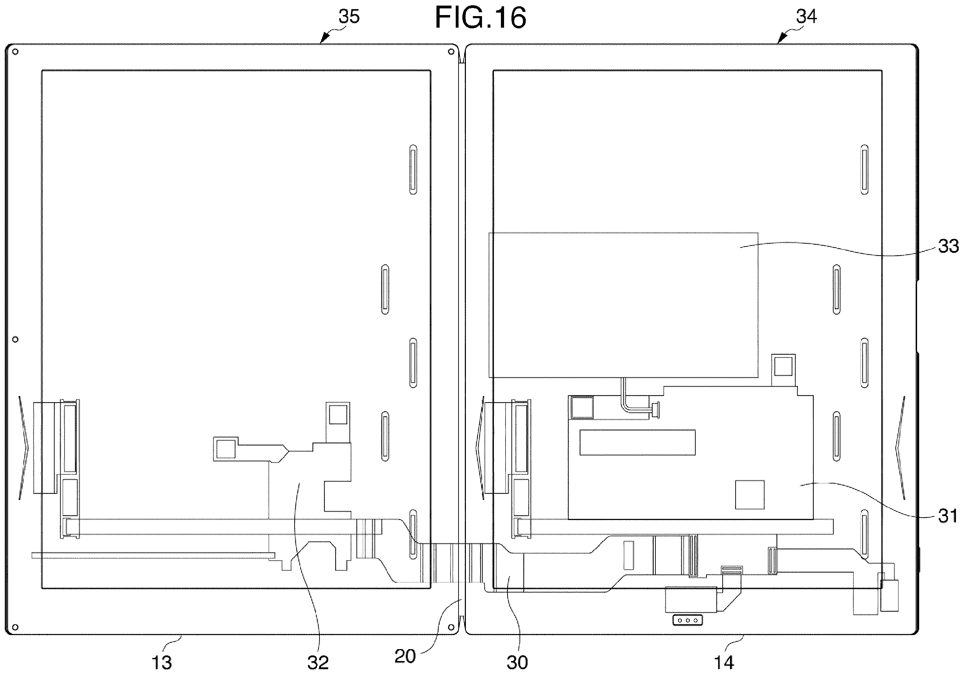

Specifically, an electrical hardware configuration that performs a smaller amount of control as long as operations required on the first display unit D1 side such as a display function, a handwriting input function, and a page turning function can be performed on the first display unit D1 side is provided on the first display unit D1, and the control unit 10 that is a main control unit and other necessary hardware components are provided on the second display unit D2 side so that the second display unit D2 can control the entire two display units D1 and D2, so that the weight of electronic apparatuses installed in the first display unit D1 is reduced, and the weight of the second display unit D2 is relatively increased. Thereby, it becomes easy for a user to open and close the first display unit D1. Of course, the weight ratio can be appropriately determined, and an arrangement configuration of hardware components may be determined according to the weight ratio. For example, although described later as an internal structure example in a diagram, it is possible to configure so that a main control unit 31 (FIG. 16) that performs main control is provided in the first display unit D1, a sub control unit 32 (FIG. 16) consisting of a display controller that controls display of a display screen of the first display portion 11 is provided in the second display unit D2, and the main control unit 31 controls the sub control unit 32 as well as controls the second display portion.

Referring to FIG. 1A, the two display units D1 and D2 are openably and closably connected to each other by a hinge 20. Although described later in detail, a flexible printed board (FPC (flexible printed circuit)) that forms the hinge 20 is directly or indirectly sandwiched between frames on display portion sides of the two display units D1 and D2 and housing portions on the opposite sides of the frames so as to be sandwiched by elastic body sheets 21 and 22 from both sides of the FPC, so that the two display units D1 and D2 can be opened and closed while maintaining strength.

A structure where the FPC is sandwiched between the two display units D1 and D2 is employed, so that the hinge does not protrude from a display surface as compared with conventional mechanical hinges and it is possible to secure widths of the frames and the display screens themselves of the two display units D1 and D2 to some extent.

In addition, the flat and bendable hinge 20 disclosed in the present application is used to connect together the two display units D1 and D2, so that the hinge portion does not occupy a large area and the thickness of the electronic musical score device 1 is not limited by the size of the hinge portion. Therefore, the thicknesses of the display units D1 and D2 can be reduced. Thus, it is possible to provide a thinner electronic musical score device 1. As a result, it is possible to set the electronic musical score device 1 within a limited rail width where the score is set on a music stand, and the electronic musical score device 1 does not fall from the music stand even when there is some impact. In addition, when holding the electronic musical score device 1, it is possible to firmly support the electronic musical score device 1 with palms of hands.

Further, the right side display unit D2 has main control functions and the left side display unit D1 is operated by the control functions so as to reduce the number of electrical signals communicating between the two display units D1 and D2. Therefore, wiring widths of the FPC that forms the hinge 20 can be large, so that the wirings can be prevented from being broken and it is possible to improve durability when opening and closing the electronic musical score device 1 and using the electronic musical score device 1 while opening it.

The component arrangement in the second display unit D2 is formed so that the position of the center of gravity of the second display unit D2 is shifted from the center of front view of the second display unit D2 downward and toward the hinge 20. For example, positions of electrical component such as the power supply unit 4, the control unit 10, and the memory which are electronic components installed in the second display unit D2 are arranged and adjusted so that the load center of the entire second display unit D2 shifts downward from the center toward the hinge. As described above, the first display unit D1 is made lighter than the first display unit D2, so that the center of gravity does not shift largely. Therefore, it is possible to firmly place the electronic musical score device 1 on an obliquely tilted music stand. The power supply unit 4 can be comprised of a battery 33 (FIG. 16) that receives supply of power through a power terminal such as USB from outside and accumulates the power.

Even when the electronic musical score device 1 is held by hands, it is possible to stably support lower portions of the first housing portion 13 and the second housing portion 14 close to the hinge by palms and fingertips of hands, so that it is easy to handle the electronic musical score device 1 even when using it in a standing posture such as when singing in chorus.

Referring to FIG. 1A, the frames 11b and 12b of the display portions 11 and 12 of the two display units D1 and D2 are provided with the page turning operation portions 16 and 17. A page turning direction is set for each of the page turning operation portions. The page turning operation portion 17 indicated by the symbol 17a is an operation portion which a user touches in order to turn the page forward. The page turning operation portion 16 indicated by the symbol 16b is an operation portion which the user touches in order to turn the page backward. Each of the operation portions 16 and 17 which the user touches can be comprised of a contact type or non-contact type mechanical or electrical switch such as an electrostatic capacity type switch, a mechanical electric contact type switch, and a switch that uses an optical sensor of infrared light that receives light reflected from an operating finger and detects the operation or the like.

A page turning direction of each page turning operation portion is shown on a frame surface corresponding to the page turning operation portion so that the user can instantly know the page turning direction as well as the user can visually recognize the page turning operation portion. Thereby, the user is guided to a page turning operation portion corresponding to the page turning direction when the user performs a page turning operation.

In this example, an indication sign represented by a leftward arrow is provided on the outside frame of the frame 12b of the second display portion 12 (that is, on the frame far from the hinge 20 located at the center) and on the inside frame of the frame 12b of the second display portion 12 (that is, on the frame close to the hinge 20), and the indication signs indicate that the page turning operation portion is the page turning operation portion 17a in a direction to turn the page forward. On the other hand, an indication sign represented by a rightward arrow is provided on the outside frame of the first display portion 11 (that is, on the frame far from the hinge 20), and the indication sign indicates that the page turning operation portion is the page turning operation portion 16b in a direction to turn the page backward.

In a simple configuration as described above, it is possible to prevent a user from mistaking page turning by determining page turning directions in advance according to positions of the displays by defining that the page turning operation portion provided on the right side display unit D2 is the so-called page turning operation portion 17a in the direction to turn the page forward and the page turning operation portion provided on the left side display unit D1 is the so-called page turning operation portion 16b in the direction to turn the page backward.

The page turning is an important operation to perform a musical performance. In addition, it is necessary for a performer to quickly determine an operation to be normally performed while performing a musical performance, so that the page turning operation portion that can issue an intuitive instruction is very important.

Therefore, in the above example, as an important operation to perform a musical performance, a music score can be surely used by providing the page turning operation portions 16 and 17 not on the displays but on the frames of the displays. In more detail, in particular, some performers who use strings of a violin or the like use the musical instrument by applying pine resin to a bow, so that fingertips are often stained by the pine resin. When accessing the page turning operation portion provided on the display by a finger containing oil, there is a risk that the surface of the display is contaminated and becomes difficult to see. However, in the present example, such a problem can also be avoided.

In an orchestra, piano duet or piano practice, and the like, one musical score is often used by two persons. In such a case, a music score turning operation is usually performed by one of the two persons. For example, regarding first violins located on the left side of an orchestra as seen from rear of the conductor, a player on the left side facing the music stand turns the page of the music score. Therefore, if the page turning operation portion is located at the right end of the electronic musical score device 1, which is farthest from the left plyer, the left player disturbs the adjacent performer.

Therefore, to avoid such a problem, as an alternative example of the arrangement of the page turning operation portions in FIG. 1A, a page turning operation portion 16a that turns the page forward may be provided on the left side frame 11b (that is, on the frame far from the hinge 20 that functions as an opening and closing axis) of the first display unit D1 and/or on the right side frame 11b (that is, on the frame close to the hinge 20 that functions as an opening and closing axis). In addition, a page turning operation portion 16b that turns the page backward may be provided on the right side frame 11b (that is, on the frame close to the hinge 20 that functions as an opening and closing axis) of the first display unit D1.

On the other hand, regarding string players located on the right side of the orchestra, a player on the right side facing the music stand usually turns the page of the music score. Therefore, if the page turning operation portion is located at the left end, which is farthest from the right player, the right player disturbs the adjacent player.

Therefore, to avoid such a problem, a page turning operation portion 17b that turns the page backward may be provided on the right side frame 12b (that is, on the frame far from the hinge 20 that functions as an opening and closing axis) of the second display unit D2 and/or on the left side frame 12b or the right side frame 12b of the second display unit D2.

In this way, the frames and the positions where the page turning operation portion 16 and the page turning operation portion 17 are placed and the directions in which the page is turned by the page turning operation portion 16 and the page turning operation portion 17 are determined so that the performers adjacent to each other can turn the music score without problem.

The above description is an example, and the electronic musical score device is not limited to the one described above. The forward feeding operation portion 16a and the backward feeding operation portion 16b of the display unit D1 may be vertically placed on the same frame, and the forward feeding operation portion 17a and the backward feeding operation portion 17b of the display unit D2 may be vertically placed on the same frame. The frame and the position where one page turning operation portion for a certain direction is placed are appropriately selected according to purpose of use and environment of use.

In the present invention, a new hinge mechanism is employed, so that an area which has been used to provide a conventional hinge can be used as a display area where touch input can be performed. Therefore, the sizes of the first and the second display screens 11a and 12a having a touch input function can be enlarged, so that the enlarged areas can be displayed as the page turning operation portions and used as user input of page turning.

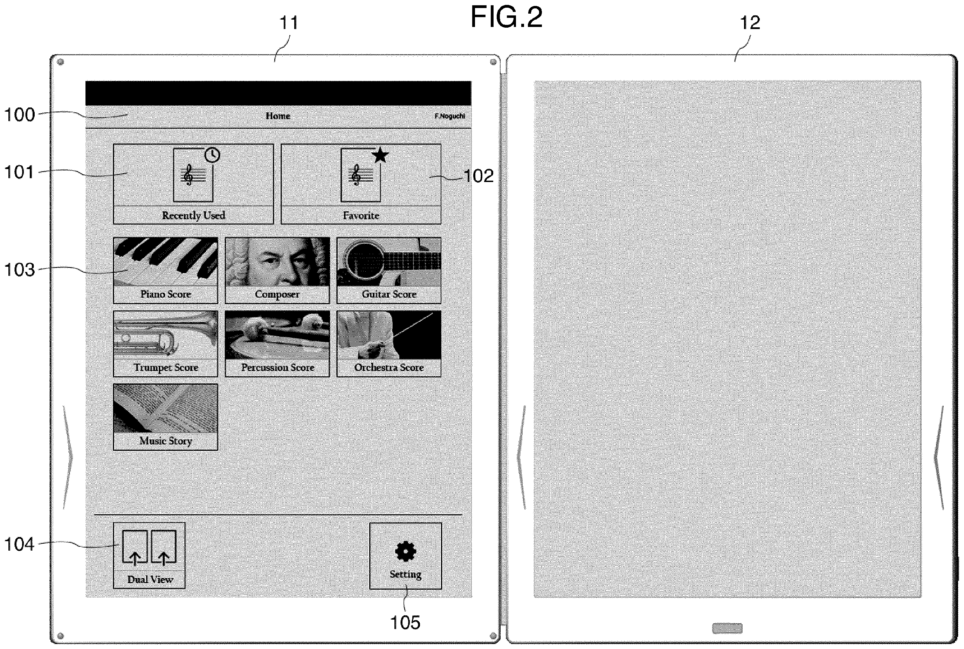

FIG. 2 is an example of a home menu screen displayed on the electronic musical score device 1.

The home menu screen 100 is provided with a use history menu 101, a favorite menu 102, a various category-based score menu 103, a dual screen menu 104, and a setting menu 105.

The use history menu 101 shows a display of scores that were used in the past. In this example, although not shown in the drawings, when the use history menu 101 is touched by hand, the menu is highlighted and names of musical scores that were used in the past are listed up on the display screen 12a of the second display portion 12 (hereinafter also simply referred to as the "second display portion 12"). Which portion of a musical score is used as the latest portion is stored in the memory of the electronic musical score device 1 as information, and when the musical score is touched, the electronic musical score device 1 displays a page of the latest portion by using the memory information.

The same goes for the favorite menu 102. When the favorite menu 102 is pressed, the favorite menu 102 is highlighted and a favorite list is displayed on the second display portion 12 based on information registered in the memory as favorite. When a score is selected from the favorite list, the electronic musical score device 1 displays a score of a latest used portion based on information of a page of the latest used portion stored as information in the memory.

In the category-based score menu 103, for example, piano score, composer score, guitar score, trumpet score, percussion score, orchestra score, and the like are selected as different category scores.

Musical scores that can be registered in the category-based score menu 103 can be downloaded from an external server that stores musical score data by accessing the external server by using a network function of the communication unit 5 of the electronic musical score device 1. The musical score data may include a musical score having audio data where elements comprising a musical piece such as musical notes, musical scales, keys, and rests of a musical score are computerized so as to be able to be reproduced as music in addition to a musical score where a paper medium is simply computerized. The electronic musical score device 1 has the audio (voice) reproducing/recording unit 6 and may further have a speaker or an earphone jack. The electronic musical score device 1 can decode an electronic musical score and reproduce audio to reproduce music.

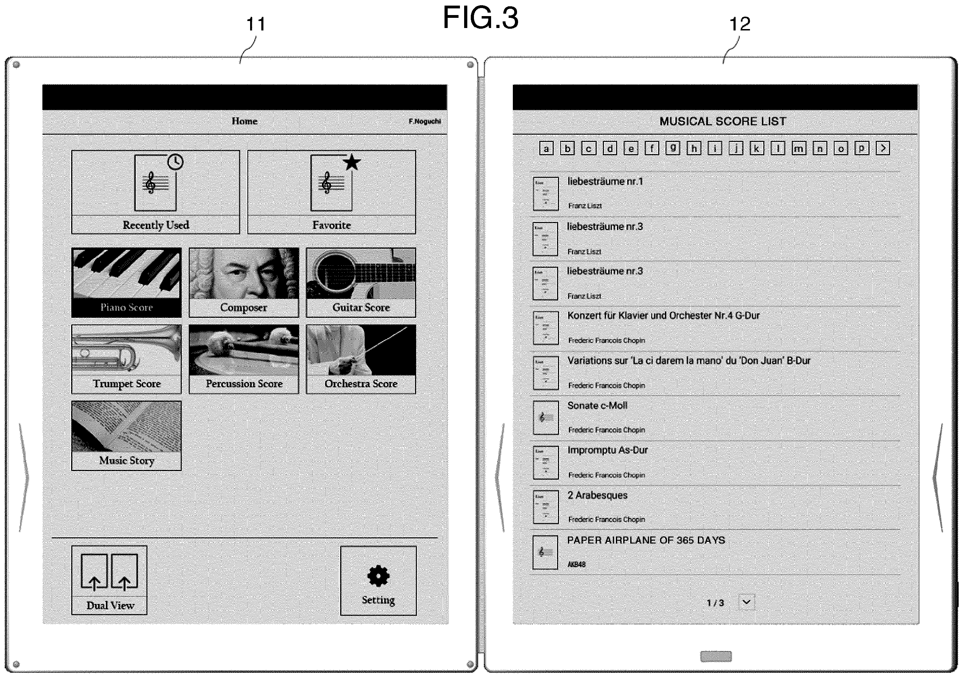

FIG. 3 shows an example of a display list when selecting a piano from among category-based scores on the home screen of the electronic musical score device 1. When the piano score is touched, the menu of the piano score is highlighted and a score list (musical number list) of the category is displayed on the second display portion 12, so that a user's selection can be received by touch input.

The dual screen menu 104 exhibits effects when, for example, a four handed piano performance is made or two or more players use different part scores.

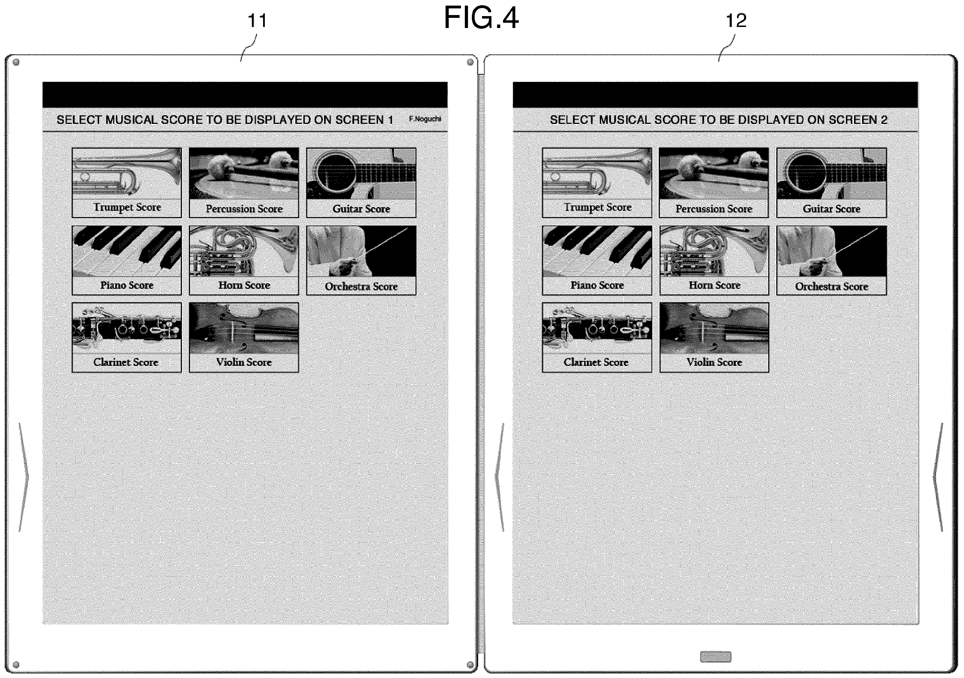

When the dual screen menu 104 is pressed, as shown in FIG. 4, in a state of initial setting, the same menu screen may be displayed on the display screen 11a of the first display portion 11 (hereinafter also simply referred to as the "first display portion 11") and the second display portion 12, and a user who uses each of the first display portion 11 and the second display portion 12 can select a selection menu of each of the display portions 11 and 12 by touching the select the selection menu.

For example, both of the display portions 11 and 12 display a score selection menu of each category, and each player can select a menu of a musical instrument played by the player. Here, the "musical instrument" does not exclude a song (vocal).

When different musical instruments are selected from the score selection menus of each category, although not shown in the drawings here, a musical score list for the selected musical instrument is displayed on each of the display portions 11 and 12. When a musical piece desired to be played is selected from the musical score lists displayed on the display portions 11 and 12, a musical score for each selected musical instrument is displayed on each of the display portions 11 and 12.

Let us return to the description of FIG. 3. When touching and selecting one musical number in the musical number list without selecting the dual screen menu 104, the musical score of the selected musical number is displayed on the display screens of the first and the second display portions 11 and 12.

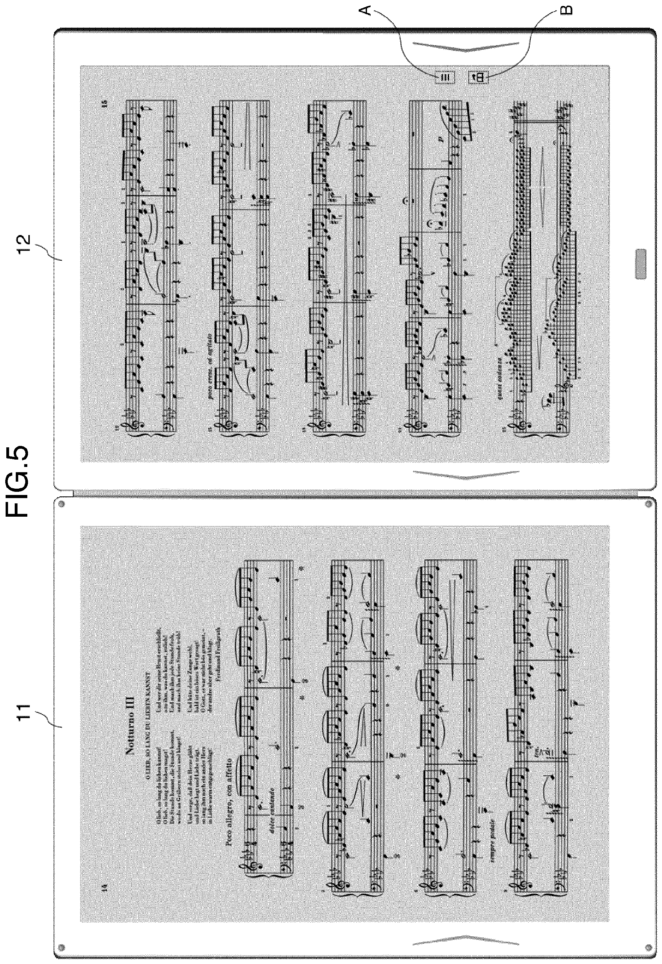

FIG. 5 shows a display example of a musical score when selecting Notturno III from the score list in FIG. 3. Immediately after the selection, Notturno III that is the title of the musical piece and Liszt who is the composer are displayed on the second display portion 12 on the right side as a front page of the musical score. However, a drawing of the above is omitted, and FIG. 5 shows a first musical score page fed thereafter by page feeding by the user.

Normally, the musical score is created so that the music proceeds from left to right and then left to right of the next page. Therefore, in the present example, the musical score is written in a manner as described above.

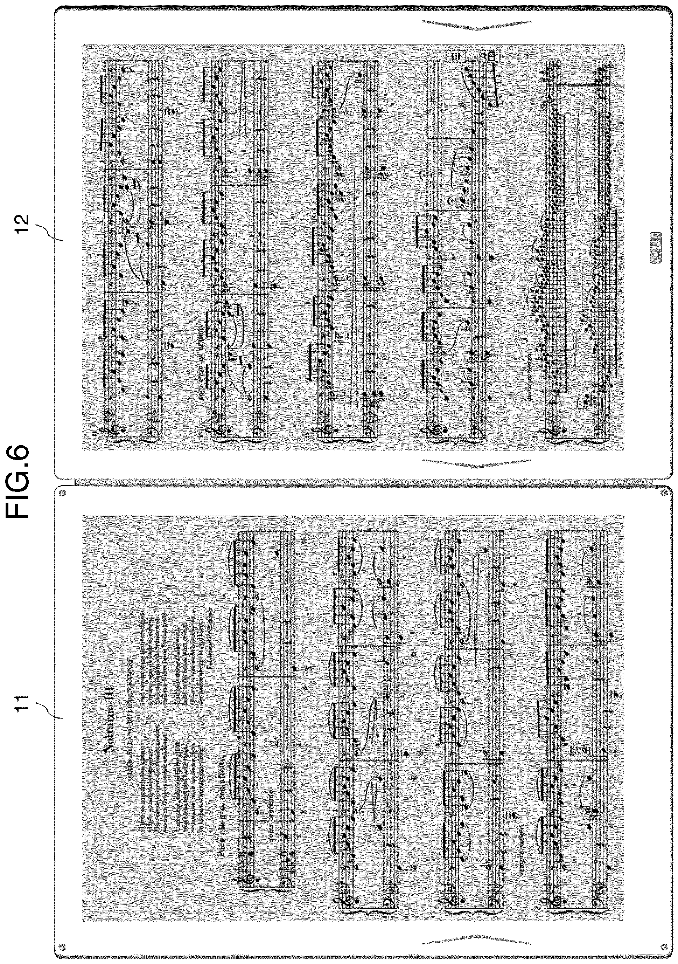

On the second display portion 12 that displays a musical score, touch input buttons A and B are displayed at the right end of the musical score. The touch input button A is a button for enlarging the size of the musical score. When the touch input button A is pressed, the musical scores are displayed so that the musical scores are enlarged to full widths of the display screens 11a and 12a of the first and the second display portions 11 and 12. FIG. 6 shows a display example of the above. The touch input button A is a toggle type switch button. Every time the button A is pressed, the original size and the enlarged size are alternately switched.

When the dual screen menu 104 is pressed in FIG. 3, two musical instruments are selected from a category selection menu, and a musical number is specified by touch from the score list, musical scores for each part of the musical number are displayed on the first display portion 11 and the second display portion 12.

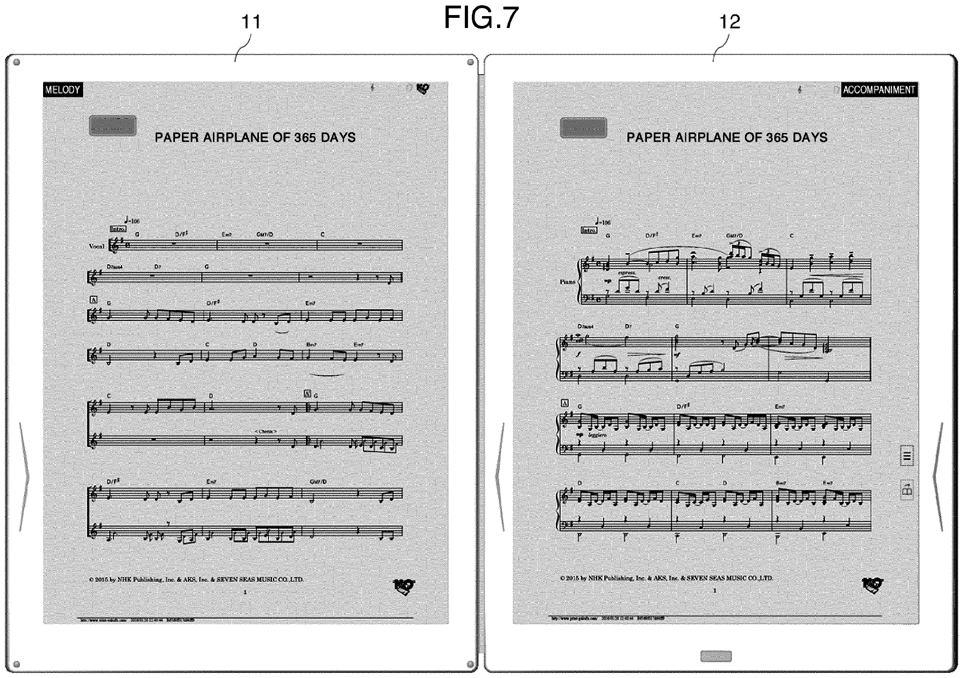

FIG. 7 shows an example of a case where the dual screen menu 104 is selected, a song (vocal) score and a piano score are selected from the category selection menu, and "Paper Airplane of 365 Days"(in English translation title) is selected from the musical number list. A vocal score is displayed on the first display portion 11 and a piano score is displayed on the second display portion 12.

When each part score is not stored in the electronic musical score device 1, corresponding electronic musical scores may be obtained from an external server by using a communication function of the electronic musical score device 1.

As described above, the electronic musical score may include a musical score having audio data where elements such as musical notes, musical scales, keys, and rests of a musical score are computerized so as to be able to be reproduced as music in addition to a musical score where a paper medium is simply computerized. Therefore, in the case of audio data computerized so as to be able to be reproduced as music, musical score data for the first display portion 11 and musical score data for the second display portion 12 are divided according to parts specified by the user, and musical score data for each divided part as shown in FIG. 7 may be displayed on the first display portion 11 and the second display portion 12 by a processing device of the electronic musical score device 1 or an external processing device that can communicate with the electronic musical score device 1.

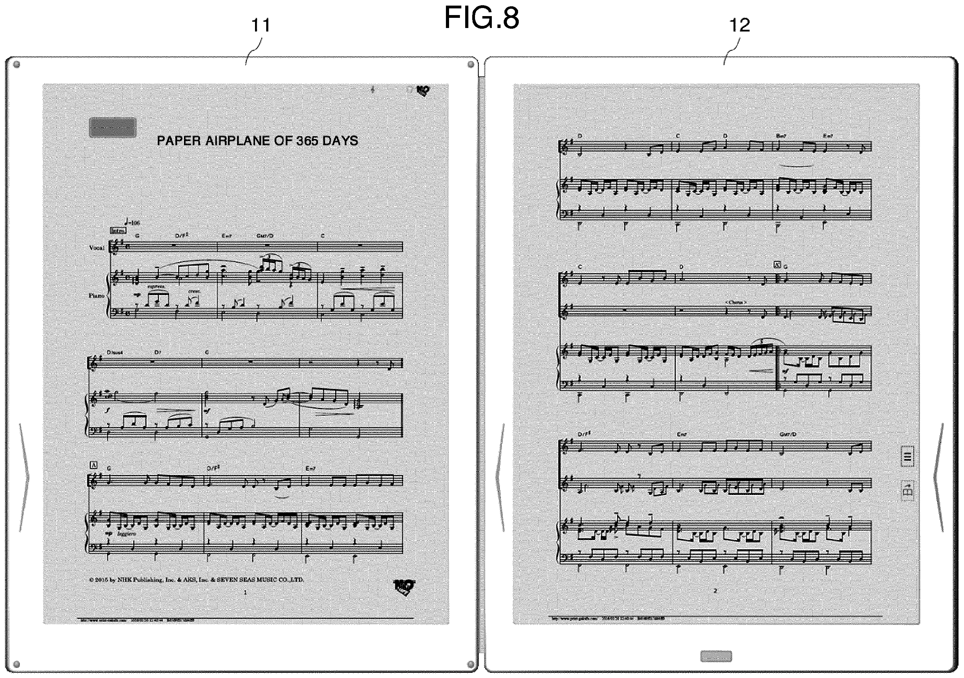

FIG. 8 shows a musical score display example in a mode where the dual screen menu 104 (FIG. 3) is not selected for comparison with FIG. 7.

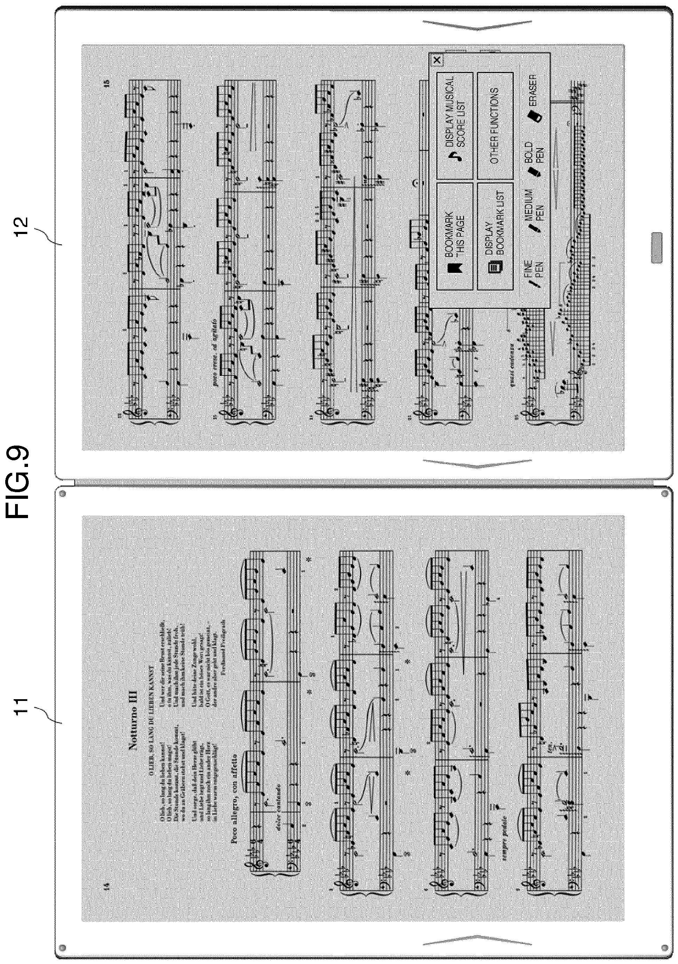

Let us return to the description of FIG. 5. When the button B shown on the second display portion 12 is selected, a pop-up menu as shown in FIG. 9 is superimposed and displayed on the musical score.

As an example of the pop-up menu, the following selection menus and the following buttons for supporting handwriting are displayed in the pop-up menu.

### (Pop-up selection menu)

- Bookmark of this page
- Display musical score list
- Display bookmark list
- Other functions

### (Pop-up handwriting support menu)

- Fine pen
- Medium pen
- Bold pen
- Eraser

"Bookmark of this page" in the pop-up selection menu is a selection menu for registering a currently displayed musical score page as a bookmark.

"Display musical score list" is to display a musical number list related to a category that has already been selected in a category menu. For example, the "Display musical score list" is convenient in a case where although the piano score is selected in the category menu and a certain musical piece is selected from a score list (musical number list), its content is high level, so that the musical number list is desired to be changed.

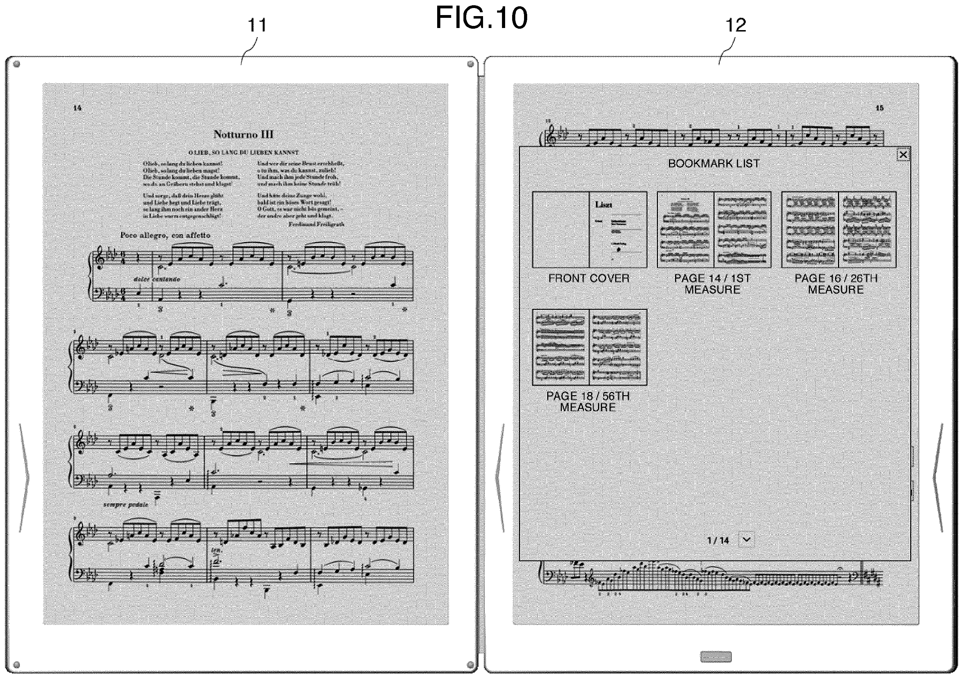

"Display bookmark list" is to display a bookmark that has already been registered. For example, FIG. 10 shows an example where some registered pages in a musical score of a specified musical number are displayed as bookmarks. By using a bookmark list, it possible to instantly display a musical score portion of a registered portion.

"Fine pen" in the pop-up handwriting support menu is to perform handwriting input by using a relatively fine pen point. "Medium pen" is to perform handwriting input by using a pen point bolder than "Fine pen" and finer than "Bold pen". "Eraser" is a function to erase a portion, which is indicated by being touched by a finger, as if an eraser is used.

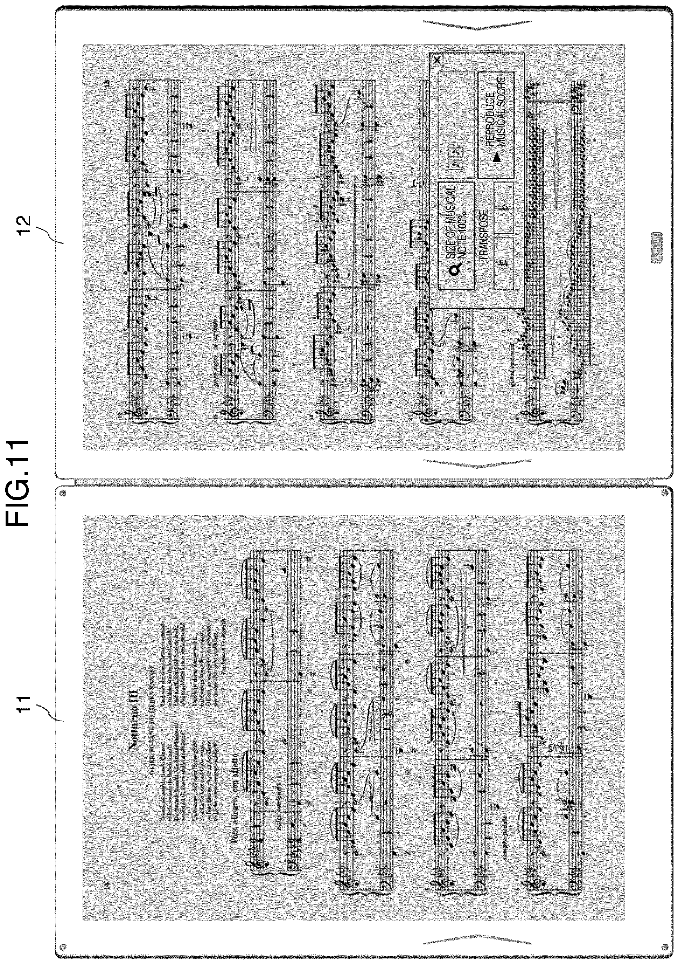

The electronic musical score device 1 has an audio (voice) reproducing device having a decoder function for reproducing music and can reproduce audio data of a selected musical score. Therefore, the electronic musical score device 1 may be newly provided with a button for reproducing audio of a musical score on the screen. Alternatively, a selection of audio (voice) reproduction can be added as the "Other functions" in the pop-up menu in FIG. 9. For example, FIG. 11 shows an example where the pop-up menu for reproducing audio is displayed on the screen.

Known various applications can be used for a method to reproduce musical score data as audio. For example, MIDI which makes music performance information into data so that the music performance information can be reproduced by an electronic musical instrument or a personal computer can be used. However, the known various applications are not limited to MIDI. The applications may be used by selecting from various music score output formats such as MusicXML and WEDELMUSIC. Alternatively, the musical score data may be outputted in a MIDI format or a MusicXML format by plugging in a necessary application, or audio may be reproduced from music score data of these formats.

The electronic musical score device 1 also has a function to transpose sound of a musical score. Therefore, the electronic musical score device 1 can modulate sound of a musical score into a sound range suitable to a player by performing transposition by using 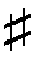 and 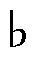 buttons or display a transposed musical score for a transposing musical instrument. Thus, the electronic musical score device 1 can display a music score by converting the music score into a key according to characteristics of a musical instrument or reproduce the musical score as audio.

When a reproduction button of a musical instrument is pressed, audio reproduction is performed in the set key. For electronic data that is not converted into audio data for each musical score element, for example, electronic data obtained by simply computerizing a musical score of a paper medium, the control unit 10 of the electronic musical score device 1 can display selected musical score data by associating musical score data with audio data corresponding to the audio data and reproduce the associated audio data as data corresponding to the musical score data as a player.

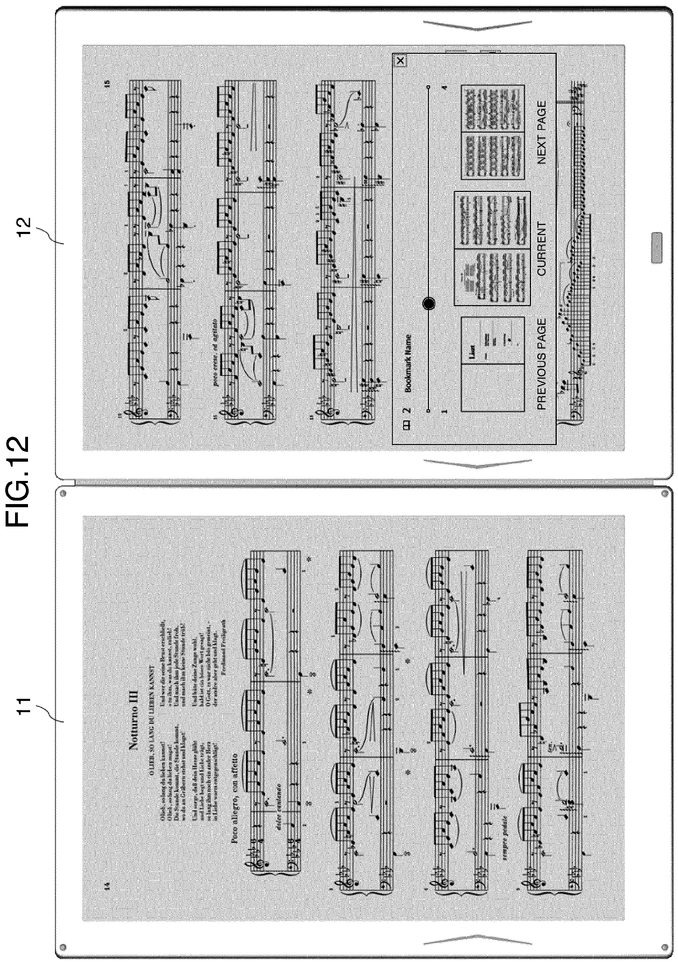

FIG. 12 shows an example where a music score is converted into an audio data format and audio is reproduced. The electronic musical score device 1 somewhat largely displays a page of a musical score that is currently being played in a dialog box by associating a portion where audio is reproduced with the music score, displays pages before and after the page to a user as a reference, and causes the user to be able to visually recognize a portion that is currently being played in the entire performance time. For example, a button of a horizontal bar that indicates a currently reproducing position is provided, and a position of a musical score to be reproduced may be changed by operating the button.

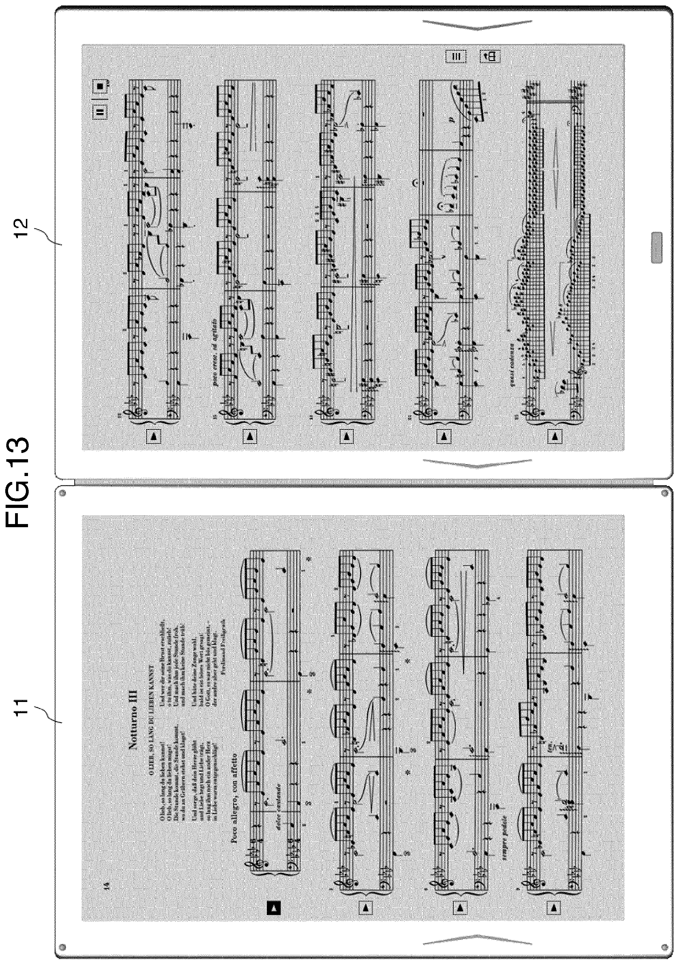

FIG. 13 shows an example where a reproduction button is provided at the beginning of each line of a music score for further improving convenience of a user. When the reproduction button is pressed, the reproduction button is highlighted and the line of the reproduction button is reproduced as audio. Thereby, audio of a desired position of the music score can be confirmed.

The electronic musical score device 1 includes the display units D1 and D2 where handwriting input can be performed, so that handwriting can be added from respective display surfaces of the first display portion 11 and the second display portion 12.

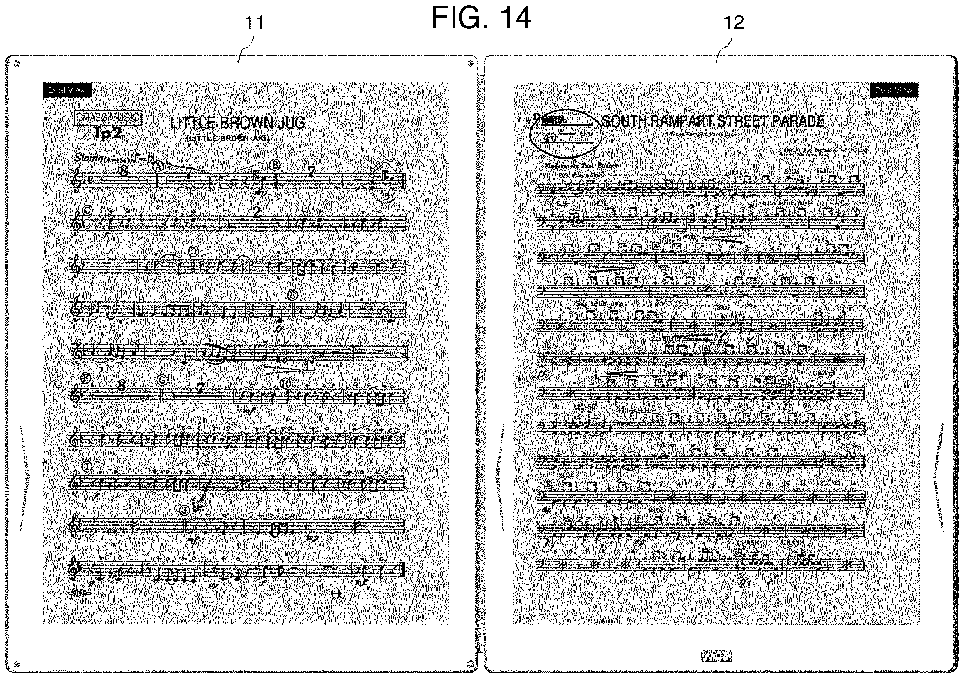

For example, FIG. 14 shows an example where the dual screen menu 104 is selected and different musical pieces are displayed on respective screens of the first display portion 11 and the second display portion 12. By using the dual screen and the handwriting input, adjacent performers can review different musical pieces by using their own time. For example, the performers can write points they noticed while reviewing a different portion or a different musical piece between performances, so that convenience as a musical score, which cannot be obtained from a conventional paper medium, is dramatically improved.

Handwritten input data can be shared by a plurality of users by using the communication function of the electronic musical score device 1. In other words, regarding the handwritten input displayed here, in addition to data written by the user himself or herself, data written by other users can also be displayed.

For example, data may be shared by a plurality of electronic musical score devices 1 used by members of an orchestra by grouping the data for the members. Further, the data may be divided into sub-groups for each part, for example, first violins, second violins, cellos, violas, and the like, and the group that share the handwritten input may be divided into sub-groups. When the conductor wants to convey the image of music to the entire orchestra, a handwritten input to the electronic musical score device 1 used by the conductor may be reflected to the electronic musical score devices 1 of all the members by using the communication function or a grouping where the handwritten input is reflected to some parts or an individual member such as the concertmaster is possible.

Use of the electronic musical score devices 1 considering various uses and purposes can be realized by hierarchical grouping including the grouping and sub-grouping or grouping where some members are partially overlapped with each other.

For example, when a piano teacher inputs important points of a musical piece to be practiced today for a plurality of students who receives a piano lesson, the piano teacher can inform the students of the important points by using the communication function of the communication unit 5. When groups are hierarchized according to levels of the students, different contents can be taught to students of high performance level and students of beginner level by handwriting input.

In addition, data written by one person and data written by another person may be selectively displayed. For example, the selective display can be performed by layering data. However, the selective display is not limited to this method.

Although not shown in the drawings here, contrary to adding data, a menu for visually deleting a part of music score is prepared. For example, while teaching a student, the teacher performs processing to hide a part of music score by using his or her own electronic musical score device 1, and thereby it is possible to delete a part of music score displayed by the electronic musical score device 1 used by the student through a communication means. When the student concentrates to look at the music score, the above processing is effective in causing the student to recognize importance of learning a musical piece and performing music rather than simply tracing the music score. In addition, when the student himself or herself performs practice by deleting a part of music score from the electronic musical score device 1 used by himself or herself, the student gradually becomes able to play the entire musical piece by ear.

It is possible to use the electronic musical score device 1 in cooperation with a mobile terminal such as a smartphone by using a communication function such as Bluetooth. For example, it is possible to download and execute an application having a page turning function in a mobile terminal and perform page forward feeding and page backward feeding of a music score on the electronic musical score device 1 from the screen of the mobile terminal.

Although not shown in the drawings here, a page fast forwarding function may be added. For example, in the same display as the pop-up menu of audio reproduction in FIG. 12, it is possible to configure so that a currently opened page is somewhat largely displayed, pages before and after the currently opened page are displayed adjacent to the currently opened page, and page fast forwarding and page fast returning are performed by moving a button of a horizontal bar that indicates a current display position.

### (First Embodiment)

Hereinafter, an electronic musical score device in accordance with a specific utilizing form of the hinge 20 disclosed in the present application will be described as an embodiment.

FIG. 16 is a diagram showing an internal structure of the electronic musical score device 1 including the hinge 20. The second housing portion 14 is attached with the main control unit 31 that controls the entire electronic musical score device 1 and a battery unit 33 that supplies power to the main control unit 31. The first housing portion 13 is attached with the sub control unit 32 that controls the first display portion 11. The main control unit 31 controls the second display portion 12 and the sub control unit 32. The sub control unit 32 and the main control unit 31 are connected by a printed board 30.

When the second display unit D2 including the second display portion 12 and the second housing portion 14 of the electronic musical score device 1 is defined as a master unit 34 and the first display unit D1 including the first display portion 11 and the first housing portion 13 of the electronic musical score device 1 is defined as a slave unit 35, the master unit 34 including the main control unit 31 can control the slave unit 35. For example, the main control unit 31 of the master unit 34 can control contents to be displayed on the display screen 11a of the slave unit 35. Thereby, the battery unit 33 and the main control unit 31 are not required to be redundantly provided to each of the master unit 34 and the slave unit 35, so that it is possible to reduce the weight of the entire electronic musical score device 1 and reduce the thickness of the entire electronic musical score device 1. Whether devices such as the main control unit 31, the sub control unit 32, and the battery unit 33 are arranged to the master unit 34 or the slave unit 35 can be arbitrarily changed according to a purpose of the electronic musical score device 1.

The printed board 30 is comprised of a printed board having flexibility and is preferably comprised of a flexible printed board (FPC: flexible printed circuit). The printed board 30 is not limited to a flexible printed board, but may be a board having flexibility. The printed board 30 has a belt shape or a sheet shape and can be freely bent by up to 360 degrees in angle. In addition, the printed board 30 extends from the first housing portion 13 to the second housing portion 14 through the hinge 20. Thereby, the printed board 30 connects the sub control unit 32 of the first housing portion 13 with the main control unit 31 of the second housing portion 14. In FIG. 16, the printed board 30 crosses the hinge 20 at one part of the hinge 20. However, the crossing is not limited to this, and the printed board 30 may cross the hinge 20 at a plurality of parts of the hinge 20.

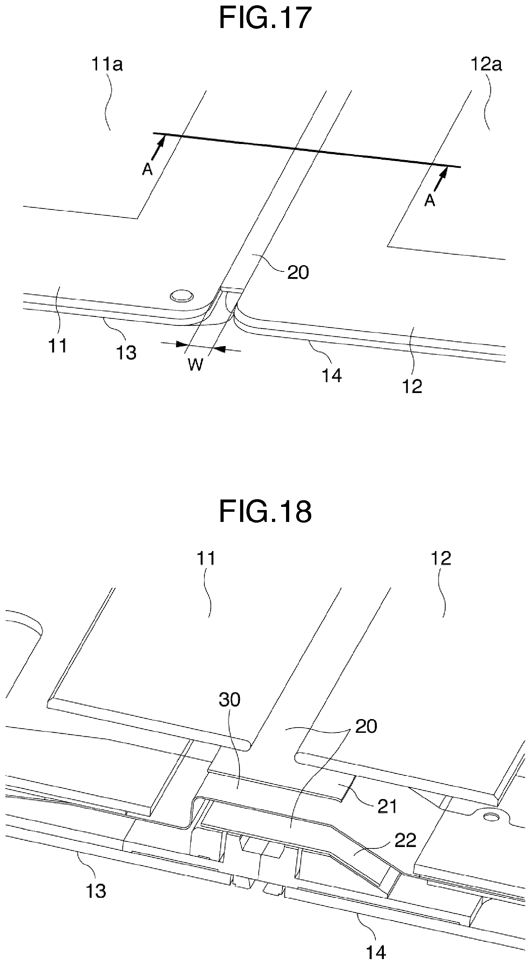

FIG. 17 is a perspective view where a portion of the new hinge 20 disclosed by the present application is enlarged. The hinge 20 includes a portion sandwiched by the first display portion 11 and the first housing portion 13, a portion sandwiched by the second display portion 12 and the second housing portion 14, and a portion exposed to the outside. The width W of the portion exposed to the outside is preferable to be, for example, 3.3 mm. However, the width W may be between 1.0 mm and 20 mm according to a thickness of when the first display portion 11 and the first housing portion 13 are overlapped or a thickness of when the second display portion 12 and the second housing portion 14 are overlapped.

As shown in FIG. 17, the width W of the portion of the hinge 20 exposed to the outside is desired to be smaller than a width of an edge portion (frame) of the first display portion 11 or the second display portion 12, that is, a width of a portion other than the display screen 11a or 12a. Preferably, the width W is smaller than one-third to one-fourth of the width of the edge portion of each of the display portions 11 and 12 and may be smaller than one-fifth as long as the electronic musical score device 1 can be opened and closed. On the contrary, when the widths of the edge portions of the display portions 11 and 12 of the electronic musical score device 1 are small, the width W may be greater than the widths of the edge portions of the display portions 11 and 12. The smaller the width W of the portion of the hinge 20 exposed to the outside, the shorter a distance between the display screen 11a of the first display portion 11 and the display screen 11b of the second display portion 12 and the shorter a distance in which the user moves the line of sight when the user looks at the display screen 11a and the display screen 12a at the same time, so that visibility is improved.

FIG. 18 is a diagram where parts are developed in a vertical direction in cross-section A-A in FIG. 17. In a state where the electronic musical score device 1 is assembled, the parts are connected. However, for explanation purposes, the parts are floated in FIG. 18. As shown in FIG. 18, the hinge 20 includes a first elastic body sheet 21 and a second elastic body sheet 22. The printed board 30 is provided between the first elastic body sheet 21 and the second elastic body sheet 22. The first elastic body sheet 21 connects the first display portion 11 and the first housing portion 13 of the electronic musical score device 1, and the second elastic body sheet 22 connects the second display portion 12 and the second housing portion 14 of the electronic musical score device 1.

As shown in FIG. 18, the printed board 30 can be arranged not on a straight line, but by being bent up and down according to an internal shape inside the first housing portion 13 or the second housing portion 14. In the example of FIG. 18, the printed board 30 crosses the hinge 20 at a relatively end portion of the first housing portion 13 and the second housing portion 14. However, at which part of the hinge 20 the printed board 30 crosses the hinge 20 is not limited to the relatively end portion.

The first elastic body sheet 21 and the second elastic body sheet 22 have a belt shape or a sheet shape, have flexibility, and can be freely bent by up to 360 degrees in angle. The first elastic body sheet 21 and the second elastic body sheet 22 are preferably formed of rubber. However, the first elastic body sheet 21 and the second elastic body sheet 22 may be formed of another elastomer material. In addition, a material other than rubber may be used as long as the material has flexibility.

An elastic body sheet formed of rubber or the like is used for the hinge 20, so that the degree of freedom of bending and stretching is increased, and it is possible to secure durability against repetitive opening and closing of the electronic musical score device 1. It is desirable that the first elastic body sheet 21 and the second elastic body sheet 22 form a flat plane without bending in a state where the electronic musical score device 1 is opened by an angle of 180 degrees. It is possible to further improve durability by not applying useless tension in a state where the electronic musical score device 1 is opened by an angle of 180 degrees. In addition, in a state where the electronic musical score device 1 is opened by an angle of 180 degrees, the first elastic body sheet 21 and the second elastic body sheet 22 become flat, so that the field of view is not hindered, feeling of integration of the display screens 11a and 12a is generated, and improvement of visibility can be expected.

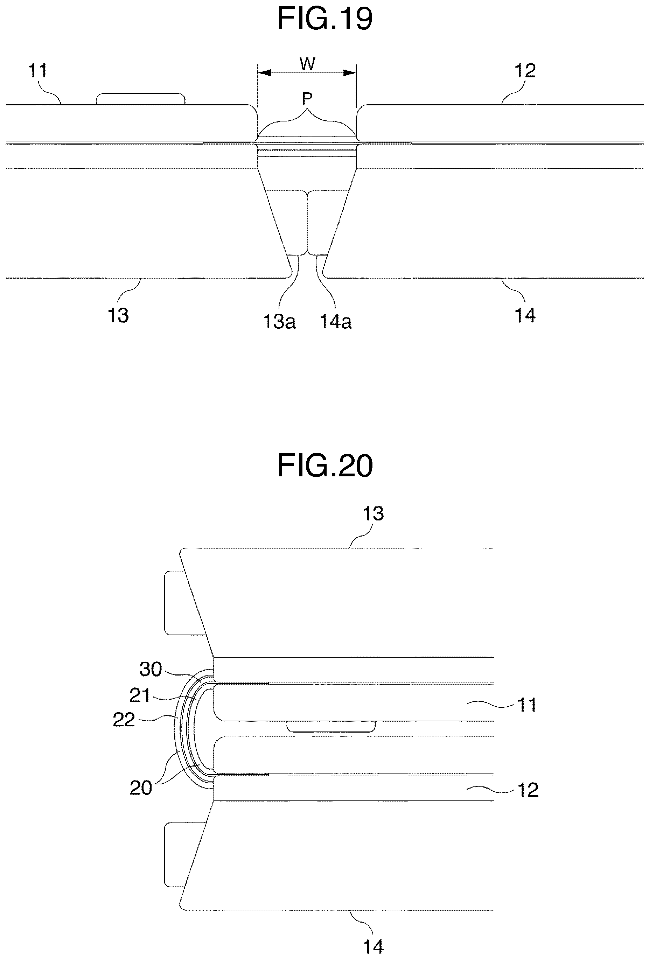

FIG. 19 is a diagram of the hinge seen from a vertical direction with respect to A-A cross-section in FIG. 17. In a state where the electronic musical score device 1 is opened by an angle of 180 degrees as in FIG. 17, a display surface of the first display portion 11 and a display surface of the second display portion 12 can be flat, that is, can be on the same plane. In a state where the display surface of the first display portion 11 and the display surface of the second display portion 12 are on the same plane, preferably, the hinge 20 becomes flat, that is, a flat plane opened by an angle of 180 degrees, at least in an exposed portion P of the hinge 20, and the same plane including the display surface of the first display portion 11 and the display surface of the second display portion 12 and the flat plane opened by an angle of 180 degrees of the hinge 20 become substantially in parallel with each other. In addition, in a state where the hinge 20 is opened by an angle of 180 degrees, preferably, the first elastic body sheet 21, the second elastic body sheet 22, and the printed board 30 become substantially in parallel with each other.

When the electronic musical score device 1 is configured not to be opened by an angle of 180 degrees or more, as shown in FIG. 19, a first support portion 13a that protrudes from the first housing portion 13 in a direction toward the second housing portion 14 from the first housing portion 13 may be provided and a second support portion 14a that protrudes from the second housing portion 14 in a direction toward the first housing portion 13 from the second housing 14 may be provided. It is possible to prevent the electronic musical score device 1 from opening by more than an angle of 180 degrees by causing the first support portion 13a and the second support portion 14a to come into contact with each other in a state where the electronic musical score device 1 is opened by an angle of 180 degrees. FIG. 19 shows an example of the first support portion 13a and the second support portion 14a for preventing the electronic musical score device 1 from opening by more than an angle of 180 degrees, but this is not limitative. The electronic musical score device 1 may be opened by up to an arbitrary angle, for example, 270 degrees in angle by changing the shape of the first support portion 13a and the second support portion 14a.

Further, the electronic musical score device 1 may be opened by up to substantially 360 degrees in angle by eliminating the first support portion 13a and the second support portion 14a. In other words, the first housing portion 13 or the second housing portion 14 may be rotated by up to substantially 360 degrees in angle around the hinge 20.

In addition, FIG. 19 illustrates an example where the thickness of the first housing portion 13 or the second housing portion 14 is greater than the thickness of the first display portion 11 or the second display portion 12, but this is not limitative. The thickness of the first display portion 11 or the second display portion 12 and the thickness of the first housing portion 13 or the second housing portion 14 may be the same, and the thickness of the first housing portion 13 or the second housing portion 14 may be smaller than the thickness of the first display portion 11 or the second display portion 12. Even when the thickness of the display portions 11 and 12 or the housing portions 13 and 14 is changed by design change of the electronic musical score device 1, it is possible to cope with the change of the thickness by expansion and contraction of the first and the second elastic body sheets 21 and 22 because the hinge 20 is formed of the first and the second elastic body sheets 21 and 22.

FIG. 20 is a diagram showing the hinge 20 when the electronic musical score device 1 is closed in FIG. 19. In a state where the electronic musical score device 1 is closed, all of the first elastic body sheet 21, the second elastic body sheet 22, and the printed board 30 are curved in the exposed portion P of the hinge 20. Gaps are provided between the first and the second elastic body sheets 21 and 22 and the printed board 30 so that the curve as shown in FIG. 20 can be made in a state where the electronic musical score device 1 is closed. In this case, the width of the gap between the first elastic body sheet 21 and the printed board 30 and the width of the gap between the second elastic body sheet 22 and the printed board 30 need not necessarily be constant, but the width of one gap may be greater than the width of the other gap. By providing such gaps, the printed board 30 can be moved freely and the printed board 30 can be prevented from being forcibly bent.

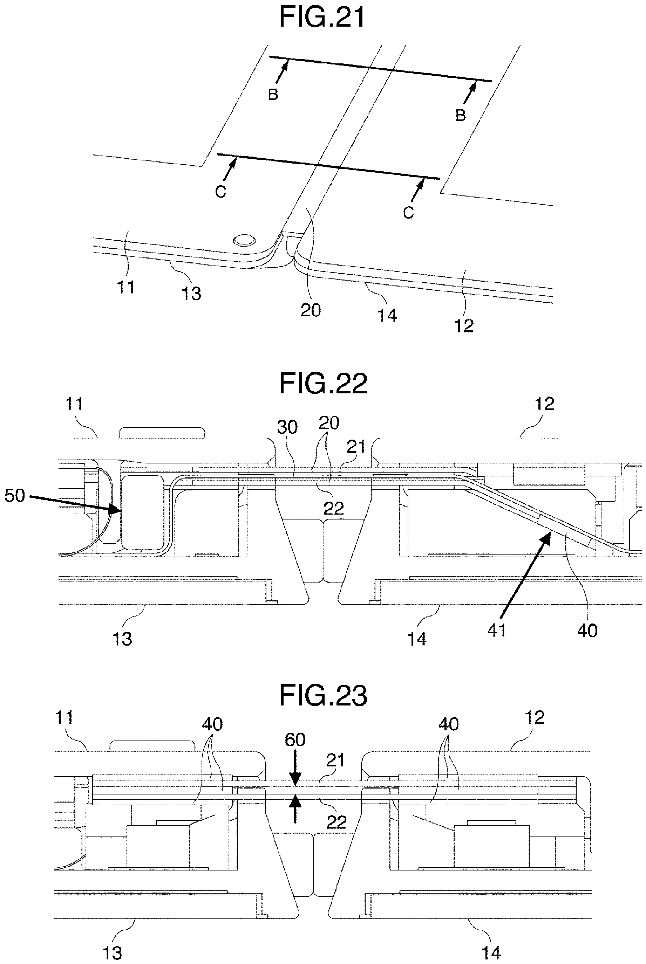

FIG. 21 is a perspective view where a portion of the hinge is enlarged. FIG. 21 shows a state where the electronic musical score device 1 is opened by an angle of 180 degrees and shows a state where the display surface of the first display portion 11 and the display surface of the second display portion 12 are in a flat state, that is, on the same plane.

FIG. 22 is a diagram showing cross-section B-B in FIG. 21. In the cross-section B-B, on the second housing portion 14 side, the second elastic body sheet 22 of the hinge 20 extends longer than the first elastic body sheet 21 and the printed board 30 is fixed to the second housing portion 14 by an adhesive member 40 in an end portion 41 of the second elastic body sheet 22 on the second housing portion 14 side. On the first housing portion 13 side, a space 50 where the printed board 30 moves and an extra length portion of the printed board 30 are arranged. Only one side of the printed board 30 is fixed in this way, so that the side where the printed board 30 moves is made clear and it becomes easy to control expansion and contraction of the printed board 30. The adhesive member 40 is preferably a double-sided tape. However, the adhesive member 40 is not limited to a double-sided tape, but may be an arbitrary adhesive agent or adhesive layer having adhesive force.

FIG. 23 is a diagram showing cross-section C-C in FIG. 21. In the cross-section C-C, the first elastic body sheet 21 on the first display portion 11 side of the hinge 20 is fixed to the first display portion 11 by the adhesive member 40 and the second elastic body sheet 22 on the first housing portion 13 side of the hinge 20 is fixed to the first housing portion 13 by the adhesive member 40. Further, in the cross-section C-C, the first elastic body sheet 21 fixed to the first display portion 11 and the second elastic body sheet 22 fixed to the first housing portion 13 are fixed by the adhesive member 40.

Similarly, in the cross-section C-C, the first elastic body sheet 21 on the second display portion 12 side of the hinge 20 is fixed to the second display portion 12 by the adhesive member 40 and the second elastic body sheet 22 on the second housing portion 14 side of the hinge 20 is fixed to the second housing portion 14 by the adhesive member 40. Further, in the cross-section C-C, the first elastic body sheet 21 fixed to the second display portion 12 and the second elastic body sheet 22 fixed to the second housing portion 14 are fixed by the adhesive member 40. A space 60 is provided between the first elastic body sheet 21 and the second elastic body sheet 22. The space 60 has a width at least greater than the thickness of the printed board 30.

### (Second Embodiment)

The electronic musical score device 1 according to the second embodiment which is another embodiment of the hinge 20 has at least the first and the second display portions 11 and 12 and at least the first and the second housing portions 13 and 14. The above is the same as the first embodiment. The second embodiment is different from the first embodiment in that the hinge 20 has at least one or more first sections 20a, at least one or more second sections 20b, at least one or more third sections 20c. Hereinafter, in the second embodiment, description of the same points as those in the first embodiment will be omitted.

In the second embodiment, the first section 20a of the hinge 20 includes the first elastic body sheet 21 that connects the first display portion 11 and the second display portion 12, the second elastic body sheet that connects the first housing portion 13 and the second housing portion 14, and the printed board 30 provided between the first elastic body sheet 21 and the second elastic body sheet 22. The second section 20b of the hinge 20 includes a third elastic body sheet 23 that connects the first display portion 11 and the second housing portion 14, and the third section 20c of the hinge 20 includes a fourth elastic body sheet that connects the first housing portion 13 and the second display portion 12.

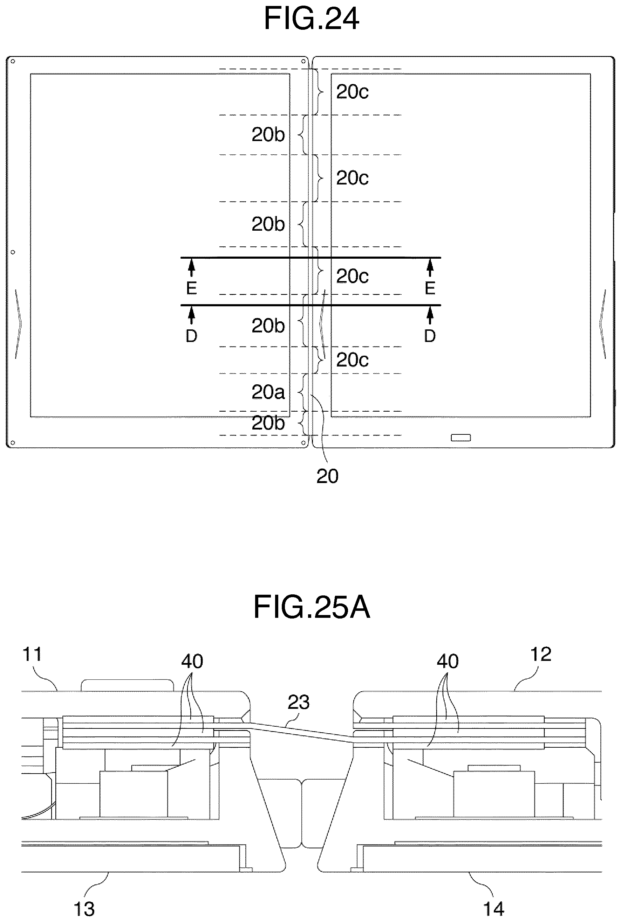

FIG. 24 is a diagram showing an example of an arrangement of the first to the third sections 20a, 20b, and 20c of the hinge 20 according to the second embodiment. In a portion of the hinge 20 other than the first section 20a, preferably, the second sections 20b and the third sections 20c are alternately arranged in the longitudinal direction of the hinge 20.

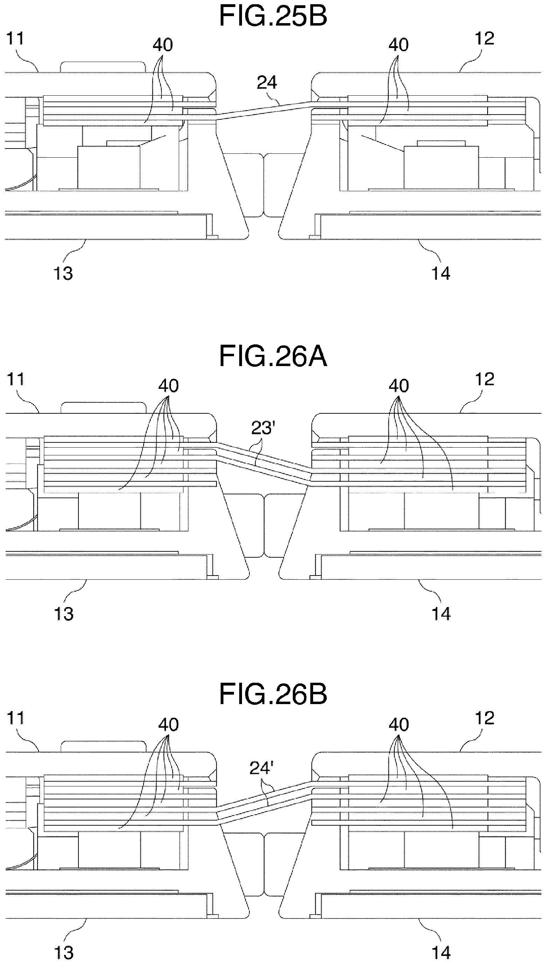

FIG. 25A is a diagram showing cross-section D-D in FIG. 24 for the hinge according to the second embodiment. FIG. 25B is a diagram showing cross-section E-E in FIG. 24 for the hinge according to the second embodiment. The cross-section D-D in FIG. 24 is located in the second section 20b of the hinge 20. The cross-section E-E in FIG. 24 is located in the third section 20c of the hinge 20.

As shown in FIG. 25A, in the cross-section D-D, the third elastic body sheet 23 on the first display portion 11 side of the hinge 20 is fixed to the first display portion 11 by the adhesive member 40 and the third elastic body sheet 23 on the second housing portion 14 side of the hinge 20 is fixed to the second housing portion 14 by the adhesive member 40.

As shown in FIG. 25B, in the cross-section E-E, the fourth elastic body sheet 24 on the first housing portion 13 side of the hinge 20 is fixed to the first housing portion 13 by the adhesive member 40 and the fourth elastic body sheet 24 on the second display portion 12 side of the hinge 20 is fixed to the second display portion 12 by the adhesive member 40.

Here, FIG. 26A and FIG. 26B are diagrams showing modified examples of FIG. 25A and FIG. 25B for the hinge portion according to the second embodiment. As shown in FIG. 26A and FIG. 26B, third elastic body sheets 23' and fourth elastic body sheet 24' may be doubly provided. In addition, the number of the third elastic body sheets 23' and the number of the fourth elastic body sheets 24' are not limited to two, but three or more third elastic body sheets 23' and three or more fourth elastic body sheets 24' may be provided.

In the second embodiment of the new hinge of the present application, in a state where the electronic musical score device 1 is opened by an angle of 180 degrees, the first elastic body sheet 21 and the second elastic body sheet 22 of the hinge 20 are substantially in parallel with each other in the first section 20a of the hinge 20. On the other hand, in the state where the electronic musical score device 1 is opened by an angle of 180 degrees, the third elastic body sheet 23 of the second section 20b of the hinge 20 and the fourth elastic body sheet 24 of the third section 20c are not in parallel with each other.

As in the second embodiment, in the hinge 20, the second sections 20b having the third elastic body sheets 23 and the third sections 20c having the fourth elastic body sheets 24 are alternately arranged, and thereby an effect of improving durability against bending of the hinge 20 is obtained.

In the first and the second embodiments and the drawings described above, as an example, a case where the electronic musical score device 1 has two screens is described. However, the hinge 20 can be applied to an electronic musical score device having three or more screens, and the hinge 20 described above may connect between these screens. For example, when the electronic musical score device 1 has three screens, it is possible to fold the electronic musical score device 1 in three by the hinges 20 provided between the screens.

Specifically, the electronic musical score device 1 may have at least a first display portion, a second display portion, and a third display portion, and at least a first housing portion, a second housing portion, and a third housing portion, and the hinge may include a first elastic body sheet that connects the first display portion and the second display portion and connects the second display portion and the third display portion, a second elastic body sheet that connects the first housing portion and the second housing portion and connects the second housing portion and the third housing portion, and a printed board provided between the first elastic body sheet and the second elastic body sheet.

Alternatively, the electronic musical score device 1 may have at least a first display portion, a second display portion, and a third display portion, and at least a first housing portion, a second housing portion, and a third housing portion, the hinge may have at least one or more first sections, at least one or more second sections, and at least one or more third sections, the first section of the hinge may include a first elastic body sheet that connects the first display portion and the second display portion and connects the second display portion and the third display portion, a second elastic body sheet that connects the first housing portion and the second housing portion and connects the second housing portion and the third housing portion, and a printed board provided between the first elastic body sheet and the second elastic body sheet, the second section of the hinge may include a third elastic body sheet that connects the first display portion and the second housing portion and connects the second display portion and the third housing portion, and the third section of the hinge may include a fourth elastic body sheet that connects the first housing portion and the second display portion and connects the second housing portion and the third display portion.

In the first to the third embodiments and the drawings described above, a case where the hinge 20 is used to connect the screens. However, the hinge 20 is not limited to this. The hinge 20 may be used not only to connect the screens, but also to connect the screen with an electronic musical score device main body including a keyboard and the like. In addition, the hinge 20 may be used to connect the electronic musical score device main body including a control unit with a lid portion including a battery.

The present invention is not limited to the above description, and it is apparent for those skilled in the art that various changes and modifications can be made within the spirit of the present invention and the scope of the accompanying claims.

### REFERENCE SIGNS LIST

- 1: electronic musical score device
- 4: power supply unit
- 5: communication unit
- 6: audio (voice) reproducing/recording unit
- 7, 8: touch input portion
- 10: control unit
- 11: first display portion
- 11a: display screen
- 11b: frame
- 12: second display portion
- 12a: display screen
- 12b: frame
- 13: first housing portion
- 14: second housing portion
- 16, 17: page turning operation portion
- 16a,: 17apage forward operation portion
- 16b, 17b: page backward operation portion
- 20: hinge
- 21: first elastic body sheet
- 22: second elastic body sheet
- 30: printed board
- 32: sub control unit
- 34: master unit
- 35: slave unit
- 40: adhesive member
- 41: end portion
- 50: space
- 60: space

## Claims

1. An electronic musical score device in which two display units are openably and closably connected, wherein
at least one page turning operation portion for performing page turning on a frame portion surrounding a display area of a display is provided on a frame of each display, and
a page turning direction is set for each of the page turning operation portions and the page turning direction of the page turning operation portion is shown on a frame surface corresponding to the page turning operation portion for allowing a user to visually recognize the page turning operation portion, and thereby when the user performs page turning, the user is guided to a page turning operation portion corresponding to the page turning direction.

2. The electronic musical score device according to claim 1, wherein the page turning operation portion is comprised of a mechanical or electrical switch such as an electrostatic capacity type switch, a mechanical electric contact type switch, and an optical sensor switch.

3. The electronic musical score device according to claim 1 or 2, wherein among the page turning operation portions, a page turning operation portion for turning the page forward is provided on a frame of a right display panel and a page turning operation portion for turning the page backward is provided on a frame of a left display panel.

4. The electronic musical score device according to any one of claims 1 to 3, wherein among the page turning operation portions, a page turning operation portion for turning the page forward is provided on a right side frame of a frame of a right display panel, which is far from an opening and closing axis, and a page turning operation portion for turning the page backward is provided on at least any one of a left side frame of the frame of the right display panel, which is close to the opening and closing axis of the displays, a right side frame of a frame of a left display panel, which is close to the opening and closing axis of the displays, and a left side frame of the frame of the left display panel, which is far from the opening and closing axis of the displays.

5. The electronic musical score device according to any one of claims 1 to 4, wherein among the page turning operation portions, a page turning operation portion for turning the page forward is provided on a left side frame of a frame of a right display panel, which is close to an opening and closing axis of the displays.

6. The electronic musical score device according to any one of claims 1 to 5, wherein among the page turning operation portions, a page turning operation portion for turning the page backward is also provided on a right side frame of a frame of a right display panel, which is far from an opening and closing axis of the displays.

7. The electronic musical score device according to any one of claims 1 to 6, wherein a selection screen for receiving musical scores of different categories or parts for left and right display panels is provided and musical scores of different categories or parts are displayed on the left and right display panels.

8. The electronic musical score device according to any one of claims 1 to 7, wherein a score selection menu containing category scores such as a score for various musical instruments, a composer score, and an orchestra score is displayed on a home screen.

9. The electronic musical score device according to any one of claims 1 to 8, wherein a menu for selecting a category or a part of musical score is displayed on each display panel when a selection screen for receiving different categories or part types for left and right display panels is selected.

10. The electronic musical score device according to any one of claims 1 to 9, wherein when a musical score is displayed, a musical score display button for accepting enlargement of the musical score is displayed on a margin of the musical score of at least one of left and right displays.

11. The electronic musical score device according to any one of claims 1 to 10, wherein when a musical score is displayed, an operation button that enables an operation to be performed on the displayed musical score is displayed on a part of a margin of the musical score of at least one of left and right displays.

12. The electronic musical score device according to any one of claims 1 to 11, wherein a plurality of electronic musical score devices are configured to be able to communicate with each other, the electronic musical score devices are grouped into one or a plurality of groups, and hand-written input information is shared among the electronic musical score devices for each group.
